# EUROPEAN PATENT APPLICATION

(11) **EP 4 475 362 A1**
(43) Date of publication of application: **11.12.2024**
(21) Application number: 24171356.9
(22) Date of filing: 19.04.2024
(51) Int. Cl.: H02B 13/045

(54) **SWITCHGEAR AND ELECTRICAL ASSEMBLY**

(30) Priority: 05.06.2023 CN 202310659548
(71) Applicant: ABB SCHWEIZ AG, 5400 Baden (CH)
(72) Inventor: ZHANG, Qi, Beijing, 102629 (CN)
(74) Representative: Zimmermann & Partner Patentanwälte mbB

(57) **Abstract**

The present disclosure relates to a switchgear and an electrical assembly. The switchgear according to the present disclosure comprises: a housing and a corrugated plate. The housing is configured to house a switch assembly in an inflated state, and the corrugated plate comprises a plurality of rigid protrusions; and a plurality of rigid recesses arranged alternatingly with the plurality of rigid protrusions, the plurality of rigid recesses configured to be fixed to a surface of the housing. Both the airtightness and pressure resistance of the switchgear according to the present disclosure are improved as compared with conventional known switchgears. Embodiments of the present disclosure further have the advantages such as lightweight, low cost, and flexibility to follow design requirements.

## Description

### FIELD

The present disclosure relates to an electrical assembly, and in particular to an electrical assembly for a high-pressure inflatable switchgear.

### BACKGROUND

A conventional inflatable switchgear includes a gas-tight housing having a single layer of sheet material. Usually, the gas pressure in the inflatable switchgear (absolute gas pressure) is below 2 bar, however, as an environmental-friendly gas replaces the greenhouse gas SF6 as a new insulating medium, the environmental-friendly gas at a high gas pressure needs to be filled in the switchgear in order to improve its insulating capacity, which requires that the switchgear can bear an inflating pressure of not less than an absolute gas pressure 6 bar. The housing of a conventional inflatable switchgear cannot bear the above-mentioned increased gas pressure. Attempts have been made to use the housing of high-gas pressure switchgear by integrally casting and increasing plate thickness. However, the integrally-cast housing with the increased plate thickness has problems such as excessive weight, high cost, and excessive size. Accordingly, there is a need for light-weighted, low-cost, and high-gas pressure switchgear.

### SUMMARY

It is an object of the present disclosure to provide a switchgear and an electrical assembly to at least partially solve the afore mentioned problems of the prior art.

An aspect of the present disclosure provides a switchgear, comprising: a housing configured to house a switch assembly in an inflated state; and a corrugated plate comprising: a plurality of rigid protrusions; and a plurality of rigid recesses arranged alternatingly with the plurality of rigid protrusions, the plurality of rigid recesses configured to be fixed to a surface of the housing.

By using the embodiments of the present disclosure, corrugated plates comprising a plurality of rigid protrusions are fixed on the housing of the switchgear, thereby enhancing the pressure resistance of the housing of the switchgear. In addition, the shape, size, number, and spacing of the rigid protrusions of the corrugated plate may be flexibly adjusted as needed to adapt to various design requirements of electrical equipment. Embodiments of the present disclosure also have the advantages such as lightweight, low cost, and flexibility to follow design requirements.

According to one or more embodiments, the plurality of rigid protrusions extend across an entire width of the corrugated plate. Thus, the rigid protrusions advantageously provide an improved pressure resistance across the entire width of the corrugated plate.

According to one or more embodiments, the rigid protrusion has a cross-sectional profile selected from a group consisting of a stepped profile, a sharp angle profile and an arched profile. In this manner, embodiments of the present disclosure employ preferable rigid protrusions having different cross-sectional profiles for different thicknesses of different corrugated plates.

According to one or more embodiments, each rigid protrusion of the plurality of rigid protrusions has the same cross-sectional profile or a different cross-sectional profile from one another. Thereby, it is possible to flexibly select rigid protrusions having different cross-sectional profiles depending on local pressure resistance requirements of the switchgear.

According to one or more embodiments, the rigid protrusion forms a cavity with the surface of the housing, a cross-sectional profile of the cavity being different from the cross-sectional profile of the outer surface of the rigid protrusion. In this way, on the one hand the pressure resistance of the switchgear is improved while the weight of the switchgear is reduced, and on the other hand the engagement of the plurality of rigid recesses with the housing increases the heat dissipation area, which is advantageous for heat dissipation of the switch.

According to one or more embodiments, the cross-sectional profile of the outer surface of the rigid protrusion is in a stepped shape; and the cross-sectional profile of the cavity is in an arched shape. In this way, the bending strength of the rigid protrusions is improved, and thereby the pressure resistance of the switchgear is improved.

According to one or more embodiments, adjacent ones of the plurality of rigid protrusions have the same spacing or different spacings therebetween. Thereby, the spacings of adjacent rigid protrusions can be flexibly adjusted according to the airtightness and pressure resistance requirements of the switchgear.

According to one or more embodiments, a thickness of the plurality of corrugated plates is in a range between 0.5 mm and 6 mm. Thus, the pressure resistance of the switchgear is improved while the weight is reduced.

According to one or more embodiments, the rigid recesses are engaged with the housing into one piece in response to electrical current or mechanical friction simultaneously applied to the plurality of rigid recesses and the housing. The corrugated plate can be fixed to the housing by simultaneously welding a plurality of rigid depressions at one time by resistance welding or friction welding, thereby simplifying the assembling process.

According to one or more embodiments, the rigid recesses are engaged with the housing into one piece in response to a laser applied to the rigid recesses or the housing. In this way, the assembling process is further simplified because a plurality of rigid recesses can be welded simultaneously and thereby the corrugated plate be fixed to the housing by operating only on one side of the rigid recesses or only on one side of the housing, by laser welding.

According to one or more embodiments, the plurality of rigid protrusions are parallel to one another. The pressure resistance of the switchgear is thereby improved.

According to one or more embodiments, the housing is filled with high-pressure gas. The dielectric performance of the switchgear are thereby improved.

Another aspect of the present disclosure provides an electrical assembly comprising the switchgear according to the above embodiments; and an electrical bushing disposed on a surface of the housing of the switchgear and coupled to a switch assembly in the switchgear.

The above aspects and advantages of the switchgear described above accordingly also apply to the electrical assembly according to the present disclosure, and will not be described in detail any more here.

### BRIEF DESCRIPTION OF THE DRAWINGS

Other advantages and designs of the present disclosure will be described in detail below with reference to the following figures, wherein:
FIG. 1 is a perspective view of an electric assembly according to an embodiment of the present disclosure;
FIG. 2 is an exploded view of a switchgear according to an embodiment of the present disclosure;
FIG. 3 is a schematic view of attaching a corrugated plate having a rigid protrusion to a housing of a switchgear according to an embodiment of the present disclosure;
FIG. 4 shows a view showing distribution of a plurality of rigid recesses for attaching a corrugated plate to a housing of a switchgear according to an embodiment of the present disclosure; and
FIG. 5A through FIG. 5F show details of various rigid protrusions according to embodiments of the present disclosure.

### DETAILED DESCRIPTION OF EMBODIMENTS

Corresponding numerals and symbols in the different figures generally denote corresponding members or elements unless otherwise indicated. The drawings are drawn to clearly illustrate the relevant aspects of the embodiments and are not necessarily drawn to scale. Edges of features shown in the figures do not necessarily indicate the termination of ranges of the features.

In the following depictions, various specific details are illustrated in order to provide a thorough understanding of various examples of embodiments according to the depictions. Embodiments may be obtained without one or more specific details, or by using other methods, components, materials, etc. In other instances, well-known structures, materials, or operations are not shown or described in detail to avoid obscuring aspects of the embodiments.

Reference in the specification to "one embodiment" or "one implementation" is intended to indicate that a particular configuration, structure, or characteristic described in connection with the embodiment is included in at least one embodiment. Thus, phrases such as "in an embodiment", "in one embodiment", and the like that may appear in various aspects of the specification are not necessarily all referring to the same embodiment. Furthermore, the particular configuration, structure, or characteristic may be combined in any suitable manner in one or more embodiments.

The titles/reference numerals used herein are provided for ease of reading only and thus do not limit the scope of protection or the scope of the embodiments. The same or similar elements are identified with the same reference numerals.

A housing of a conventional inflatable switchgear is typically made of a material such as 304 steel. When a relative air pressure in the inflatable switchgear is below 2 bar, a compressive strength of the housing made of a material such as 304 steel is sufficient. However, as an environmental-friendly gas replaces a greenhouse gas SF6 as a new insulating medium, the environmental-friendly gas with a high gas pressure needs to be filled into the switchgear to improve its insulating capacity, which requires that the switchgear to withstand a gas-filling pressure of not less than 6 bar absolute gas pressure. Attempts have been made to obtain a housing for a one-piece high voltage switchgear by integral casting. However, the integrally-cast housing has problems such as excessive weight, high cost and excessive size. Attempts have also been made to attach reinforcing ribs directly to the surface of the housing of the switchgear. However, the approach of attaching the reinforcing ribs directly might not be able to meet the pressure resistance requirement of not less than 6 bar. Accordingly, there is a need for an improved light-weighted, low-cost and pressure-resistant inflatable switchgear housing.

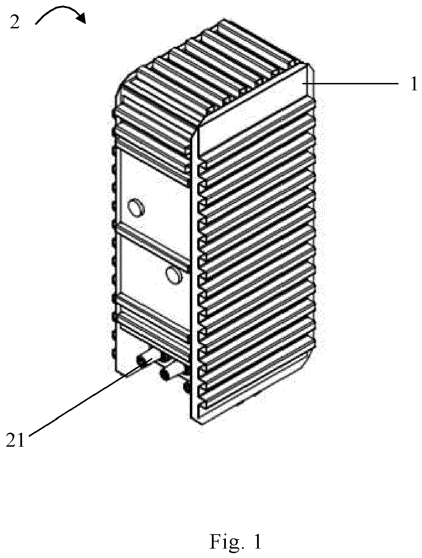

In order to solve these problems in the known solutions, the present disclosure proposes a switchgear. Exemplary embodiments of the switchgear of the present disclosure will be described in detail below with reference to FIG. 1 through FIG. 5F. According to an exemplary embodiment of the present disclosure, corrugated plates having rigid protrusions are fixed to surfaces of a housing of a switchgear, thereby increasing pressure resistance of the corresponding surface of the housing. Furthermore, rigid protrusions with increased density being provided at critical areas of the surface of the housing, so that the pressure resistance of the critical areas of the surface of the housing is further improved, thereby further improving the safety and reliability of the switchgear. The exemplary embodiments of the present disclosure further have rigid recesses which are on the corrugated plate, arranged alternatingly with the rigid protrusions, and fixed to the switchgear housing, thereby providing an improved bending strength of the switchgear housing and thus an improved pressure resistance. According to the exemplary embodiments of the present disclosure, the pressure resistance of the switchgear housing is improved at least by the bending strength provided by the rigid protrusions on the corrugated plate. As compared with the manner of integrally casting the housing with a larger thickness, the exemplary embodiments of the present disclosure have advantages such as lightweight, low cost, and allowance for flexible adjustment on-site according to design requirements.

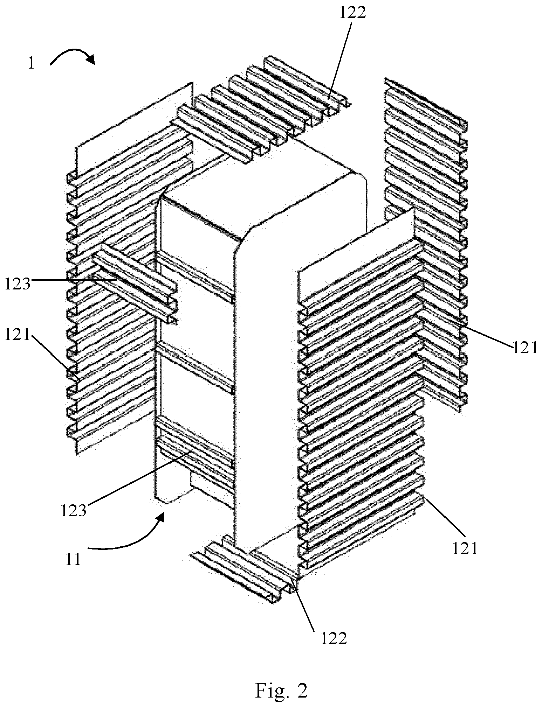

FIG. 1 is a perspective view of an electrical assembly 2 according to an aspect of the present disclosure. The electrical assembly 2 may have a switchgear 1 and an electrical bushing 21 disposed on a surface of the switchgear 1. The electrical bushing 21 may be used to couple a conductor (wire) with a switching assembly housed in the switchgear 1. In a normal operating state, the switchgear 1 is filled with insulating gas medium at a high gas pressure, for example a relative gas pressure above 2 bar. In order to prevent the housing of the switchgear 1 from deforming or even breaking due to the high gas pressure of the insulating gas filled therein, the pressure resistance of the switchgear can be improved by using the embodiments described with reference to FIG. 2 through FIG. 5F.

FIG. 2 is an exploded view of a switchgear according to an embodiment of the present disclosure. As stated above, in the normal operating state, the switchgear 1 shown in FIG. 2 is filled with insulating gas at a relative pressure above 2 bar. For example, high-pressure insulating gas is contained in the housing 11 of the switchgear 1, thereby providing a desired insulating performance for electrical elements provided in the housing 11. In order to improve the pressure resistance of the housing 11, for example to reduce deformation, a plurality of corrugated plates 121, 122, 123 are fixed to a surface of the housing 11. A first corrugated plate 121 of the plurality of corrugated plates is fixed to side surfaces and a rear surface of the housing 11, a second corrugated plate 122 is fixed to top and bottom surfaces of the housing 11, and a third corrugated plate 123 is fixed to a front surface of the housing 11. The first and second corrugated plates 121 and 122 are configured to cover entire areas of the respective surfaces of the housing 11. For example, the first corrugated plate 121 has the same size and contour as the side surfaces of the housing 11. The third corrugated plate 123 is configured to cover only a part of the front surface of the housing 11. An exposed portion of the front surface of the housing 11 has a port for electrically coupling an electrical element inside the housing 11 with the outside. Although FIG. 2 shows a plurality of corrugated plates 121, 122, 123 fixed to the outer surface of the housing, corrugated plates 121, 122, 123 in alternative embodiments may also be fixed to the inner surface of the housing. In some embodiments, the thickness of the corrugated plates 121, 122, 123 may be in a range of between 0.5 mm and 6 mm, preferably between 1 mm and 5 mm, and more preferably between 3 mm and 4.5 mm.

FIG. 2 shows that one first corrugated plate 121 is fixed to each of the side surfaces of the housing 11, but in an alternative embodiment, the side surface of the housing 11 may also have a plurality of first corrugated plates 121 respectively fixed to corresponding regions of a plurality of regions of interest. The regions of interest may, for example, be regions where the housing 11 is expected to bear a greater local pressure.

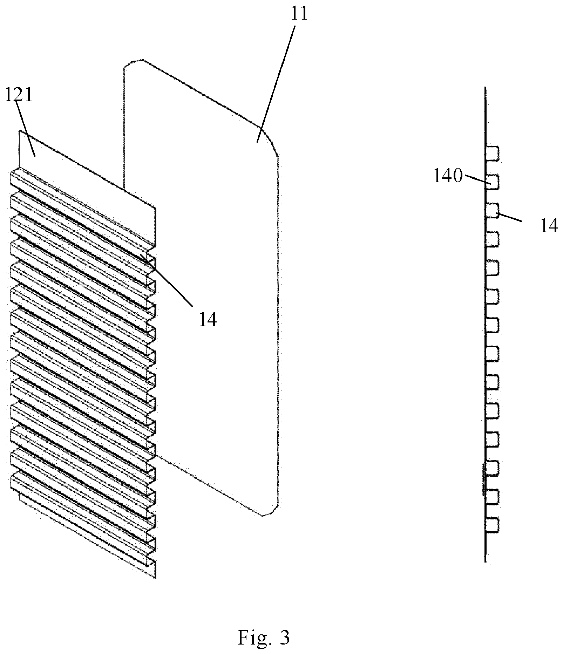

A first corrugated plate 121 according to an aspect of the present disclosure is specifically described below with reference to FIG. 3 through FIG. 5F.

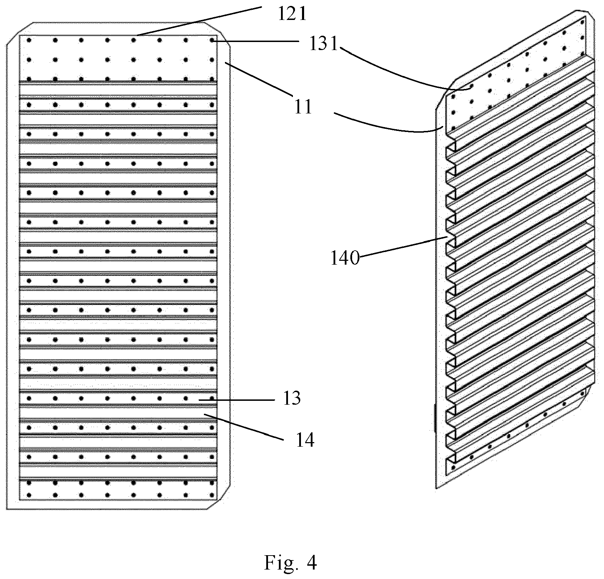

FIG. 3 and FIG. 4 exemplarily illustrate schematic views in which the first corrugated plate 121 is fixed to the side surface of the housing 11. As illustrated in FIG. 3, the first corrugated plate 121 may have a plurality of rigid protrusions 14 and a plurality of rigid recesses 13 parallel to one another extending across an entire width thereof. For example, the plurality of rigid protrusions 14 may be arranged alternately with the plurality of rigid recesses 13. For example, the plurality of rigid recesses 13 may be configured to space adjacent rigid protrusions 14. The plurality of rigid recesses 13 may also be configured to fix the first corrugated plate 121 to the corresponding side surface of the housing 11. A spacing between the plurality of rigid recesses 13 may be selected from a range of between 20 mm and 150 mm depending on the pressure to which the first corrugated plate 121 is expected to bear. In some embodiments, the rigid recesses 13 may be fixed to the housing 11 by screws and nuts. In some embodiments, the rigid recesses 13 may be fixed to the housing 11 by directly applying a resistance welding, friction welding or laser welding process at positions where the first corrugated plate 121 corresponds to the surface of the housing 11. In response to an electric current, friction or laser applied in the resistance welding, friction welding or laser welding process, surface portions of the rigid recesses 13 at respective positions where the first corrugated plate 121 corresponds to the housing 11 are heated and melted and joined into one piece with the housing 11 to form corresponding rigid joined portions 131. As compared to conventional welding using electric arc welding or gas welding, resistance welding or laser welding can be applied to a plurality (preferably, all) of the rigid recesses 13 of the first corrugated plate 121 at one time. Furthermore, the resistance welding or laser welding process does not require the melting of solder rods (wires) which is necessary in the arc welding or gas welding process. Therefore, the rigid recesses 13 formed by the resistance welding or laser welding process do not include impurities. Accordingly, the welding portion 13 according to the embodiment of the present disclosure may have a higher mechanical strength and a simpler and faster assembling step than the conventional arc welding or gas welding process.

According to one or more embodiments, the rigid protrusion 14 of the first corrugated plate 121 has an opening 141 in a direction facing the corresponding surface of the housing 11. When the first corrugated plate 121 is fixed to the corresponding surface of the housing 11, the opening 141 forms a cavity 140 with the corresponding surface of the housing 11. In an example not shown, the rigid protrusion 14 itself may include a cavity 140. In still other embodiments, rigid protrusion 14 may include an opening 141 and a cavity 140. In further embodiments not shown, some of the plurality of rigid protrusions 14 of the first corrugated plate 121 may include openings 141, and the remaining rigid protrusions 14 may include cavities 140. The cavity 140 allows a gas to flow freely therein, thereby improving the heat dissipation performance of the switchgear 1.

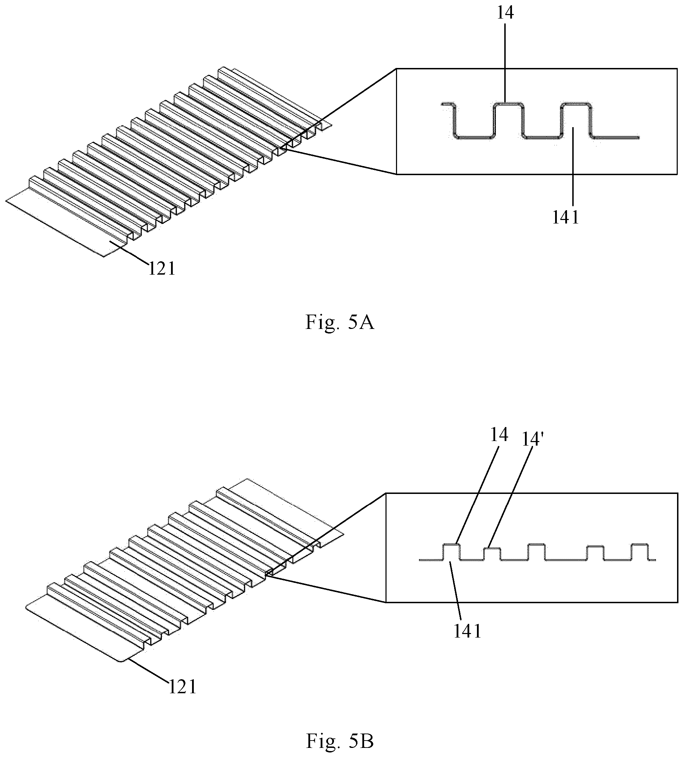

Rigid protrusions 14, 14', 15, 16 according to different aspects of the present disclosure are shown with reference to FIG. 5A through FIG. 5F. Rigid protrusions 14, 14', 15 and 16 shown in FIG. 5A through FIG. 5F may each have a flat surface to reduce stress concentration, but the scope of the present disclosure is not limited in this respect. For example, the outer surface of the rigid protrusion may have projections or depressions to improve a strength of a local bending zone of the rigid protrusion.

Referring first to FIG. 5A, the outer surface of the rigid protrusion 14 is shown to have an "n" shaped, or stepped cross-section. FIG. 5A shows equal spacing between two adjacent rigid protrusions 14. In some embodiments, the rigid protrusion 14 has a height ranging between 20 mm and 60 mm, and preferably 45 mm. A width of the rigid protrusion 14 is in a range of between 20 mm and 60 mm, and preferably 40 mm. The spacing between adjacent rigid protrusions 14 is in a range of 50 mm to 150 mm, and preferably 90 mm. Alternatively, corners of the outer surface of the rigid protrusion 14 may be chamfered or rounded to avoid stress concentrations to further improve the pressure resistance. In addition, the chamfers or fillets of the outer surface of the rigid protrusion 14 also avoid charge accumulation and improve the dielectric performance.

In the example of FIG. 5B, the plurality of rigid protrusions of the first corrugated plate 121 have different sizes and spacing from one another. In the non-limiting example of FIG. 5B, the first corrugated plate 121 has a plurality of first rigid protrusions 14 and a plurality of second rigid protrusions 14'. The first rigid protrusions 14 may have a first cross-sectional area and the second rigid protrusions 14' may have a second cross-sectional area that is less than the first cross-sectional area. For example, the first rigid protrusions 14 may be provided in a region where the first corrugated plate 121 is expected to bear a greater pressure. The second rigid protrusions 14' may be disposed between the first rigid protrusions 14 to further increase the pressure resistance. It is possible to have only the second rigid protruding portions 14' without the first rigid protruding portions 14 in a region where the first corrugated plate 121 is expected to bear a smaller pressure. Although FIG. 5B illustrates two types of rigid protrusions, i.e., first rigid protrusions 14 and second rigid protrusions 14', the scope of the present disclosure is not limited to this, i.e., the first corrugated plate 121 may have more types of rigid protrusions. In an alternative embodiment, the first corrugated plate 121 may have a plurality of first rigid protrusions 14 extending transversely across the entire width of the corrugated plate and additional rigid protrusions extending in a direction that is not parallel to the extension direction of the first rigid protrusions 14.

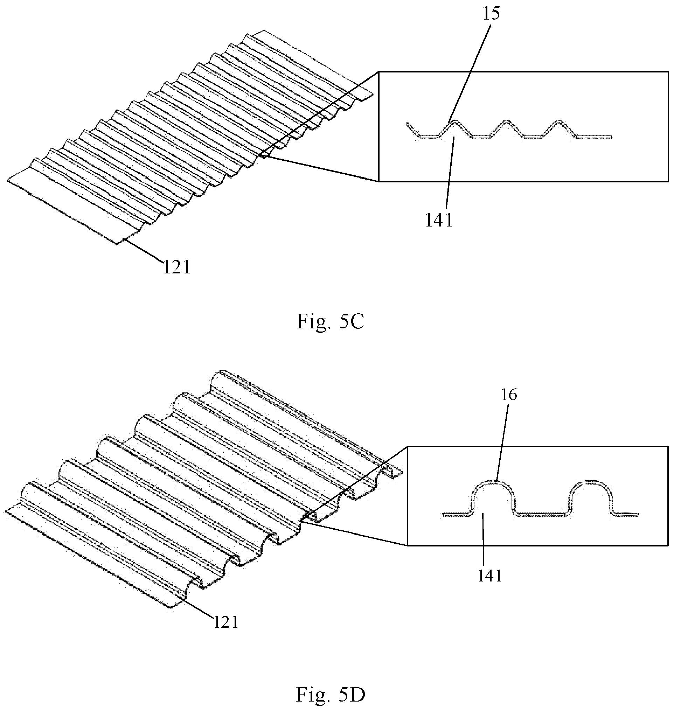

FIG. 5C and FIG. 5D show rigid protrusions 15 and 16 having alternative cross-sectional profiles. For example, FIG. 5C shows rigid protrusions 15 having a sharp angle outer surface profile. The rigid protrusion 15 having the sharp angle outer surface profile may form a cavity with an isosceles triangular cross section with the surface of the housing 11, and its bottom edge is in a plane in which the first corrugated plate 121 extends. In a non-limiting example, a thickness of the corrugated plate having the rigid protrusions 15 is in a range between 1 mm and 5 mm, and preferably 3 mm. The bottom edge of the rigid protrusion 15 may have a length in a range between 35 mm and 75 mm, and preferably 55 mm, and the rigid protrusion 15 has a height in a range between 40 mm and 80 mm, and preferably 60 mm. In some embodiments, apexes of the isosceles triangular cross-section of the rigid protrusion 15 may have rounded corners to avoid stress concentrations. In addition, the rounded corners at the apexes of the rigid protrusion 15 may also avoid charge accumulation and improve the dielectric performance. Rigid protrusions 16 having an arched outer surface profile are shown in FIG. 5D. It is noted that the arch may be part of a circumferential curve or part of a non-circumferential curve (e.g., a parabola). The rigid protrusion 16 may have a cross-sectional profile formed by a single arch or a composite cross-sectional profile formed by a plurality of arches in combination with a flat portion. The outer surface of the rigid protrusion 16 does not have any sharp portions, thereby minimizing charge accumulation and improving dielectric performance while avoiding stress concentration.

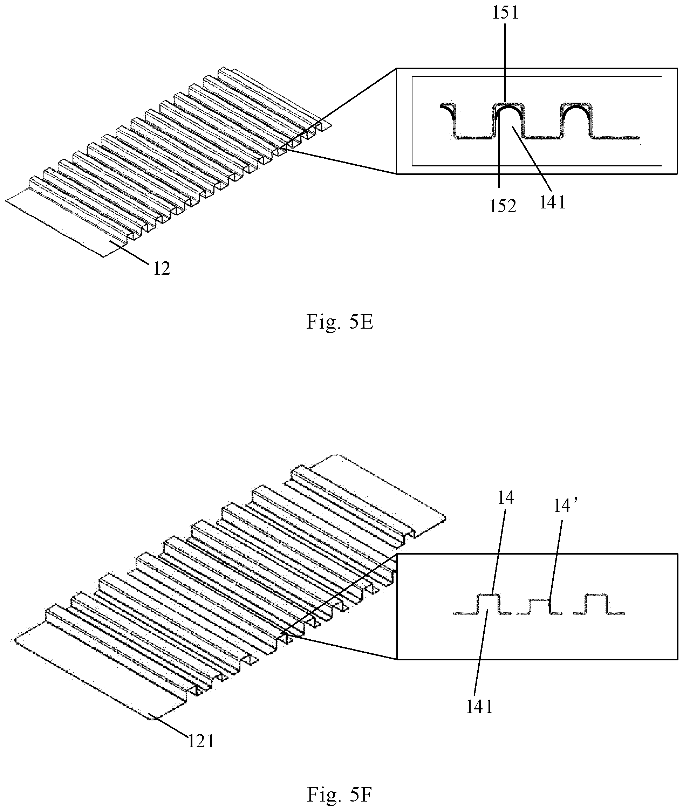

FIG. 5E shows that the cavity 140 of the first corrugated plate 121 may also have a different cross-sectional profile than the outer surface profile of the rigid protrusion 14, as desired. For example, the surface of the rigid protrusion 14 facing away from the housing 11 may have a stepped profile 151, while the surface of the rigid protrusion 14 facing the housing 11 may have an arched profile 152.

FIG. 5F shows that the first corrugated plate 121 may have a plurality of separate sub-corrugated plates, and each sub-corrugated plate has corresponding rigid protrusions 14, 14'. The spacing between the sub-corrugated plates may be flexibly selected as desired. Although FIG. 5F shows each sub-corrugated plate has only one rigid protrusion, the scope of the present disclosure is not limited in this respect. For example, the sub-corrugated plate may have two or more rigid protrusions, and each sub-corrugated plate may have a different number of rigid protrusions. The rigid protrusions of the sub-wave plates may have an outer surface profile the same as or different from that of the rigid protrusions 14, 14', 15, 16. For example, the sub-corrugated plates may have one or more of the rigid protrusions 14, 14', 15, 16 as described above with reference to FIG. 5A through FIG. 5E, or other rigid protrusions not shown. The various aspects and advantages described above with reference to FIG. 5A through FIG. 5E apply to the first corrugated plate with sub-corrugated plates shown in FIG. 5F, and will not be described in detail for brevity.

In an embodiment not shown, the first corrugated plate 121 may have one or more types of the rigid protrusions 14, 14', 15, and 16. Furthermore, it is appreciated that although the present disclosure shows that rigid protrusions 14, 14', 15, and 16 all extend in a linear manner across the entire width of the corrugated plate, the scope of the present disclosure is not limited thereto. For example, the rigid protrusions may extend across all or only a portion of the width of the corrugated plate in a curved or broken line fashion. In particular embodiments, the surfaces of rigid protrusions 14, 14', 15, and 16 may also have sub-projections and sub-depressions as needed.

According to embodiments of the present disclosure, the aspects and advantages described above with respect to the first corrugated plate 121 also apply correspondingly to the second and third corrugated plates 122, 123 according to the present disclosure, and will not be described in detail any longer here.

Many modifications and other embodiments of the present disclosure set forth herein will come to mind to one skilled in the art to which the present disclosure pertains having the benefit of the teachings presented in the foregoing depictions and relevant figures. Therefore, it is to be understood that the embodiments of the present disclosure are not to be limited to the specific embodiments disclosed and that modifications and other embodiments are intended to be included within the scope of the present disclosure. In addition, while the above depictions and relevant figures describe example embodiments in the context of certain example combinations of features and/or functions, it should be appreciated that different combinations of features and/or functions may be provided by alternative embodiments without departing from the scope of the present disclosure. In this regard, for example, other combinations of features and/or functions different from those expressly described above are also contemplated as being within the scope of the present disclosure. Although specific terms are employed in the text herein, they are used in a generic and descriptive sense only and not intended for limitation.

## Claims

1. A switchgear (1), comprising:
a housing (11) configured to house a switch assembly in an inflated state; and
a corrugated plate (121, 122, 123) comprising:
a plurality of rigid protrusions (14, 15, 16); and
a plurality of rigid recesses (13) arranged alternatingly with the plurality of rigid protrusions, the plurality of rigid recesses configured to be fixed to a surface of the housing (11).

2. The switchgear (1) according to claim 1, wherein the plurality of rigid protrusions (14, 15, 16) extend across an entire width of the corrugated plate (121, 122, 123).

3. The switchgear (1) according to claim 1 or 2, wherein the rigid protrusion of the plurality of rigid protrusions (14, 15, 16) has a cross-sectional profile selected from a group consisting of a stepped profile, a sharp angle profile and an arched profile.

4. The switchgear (1) according to any of claims 1 to 3, wherein each rigid protrusion (14, 15, 16) of the plurality of rigid protrusions (14, 15, 16) has the same cross-sectional profile or a different cross-sectional profile.

5. The switchgear (1) according to any of claims 1 to 4, wherein the rigid protrusion (14, 15, 16) forms a cavity (140) with the surface of the housing, a cross-sectional profile of the cavity (140) being different from the cross-sectional profile of an outer surface of the rigid protrusion.

6. The switchgear (1) according to claim 5, wherein the cross-sectional profile of the outer surface of the rigid protrusion is in stepped shape; and
the cross-sectional profile of the cavity (140) is in an arched shape.

7. The switchgear (1) according to any of claims 1 to 6, wherein a plurality of pairs of adjacent ones of the plurality of rigid protrusions (14, 15, 16) have the same spacing or different spacing therebetween.

8. The switchgear (1) according to any of claims 1 to 7, wherein a thickness of the corrugated plate (121, 122, 123) is in a range between 0.5 mm and 6 mm.

9. The switchgear (1) according to any of claims 1 to 8, wherein the plurality of rigid recesses (13) are engaged with the housing (11) into one piece in response to electrical current or mechanical friction simultaneously applied to the plurality of rigid recesses (13) and the housing (11).

10. The switchgear (1) according to any of claims 1 to 8, wherein the plurality of rigid recesses (13) are engaged with the housing (11) into one piece in response to a laser applied to the plurality of rigid recesses (13) or the housing (11).

11. The switchgear (1) according to any of claims 1 to 10, wherein the plurality of rigid protrusions (14, 15, 16) are parallel to one another.

12. An electrical assembly (2), comprising:
the switchgear (1) according to any of claims 1-11; and
an electrical bushing (21) disposed on a surface of the housing (11) of the switchgear (1) and coupled to a switch assembly in the switchgear (1).
